# EUROPÄISCHE PATENTSCHRIFT

(11) **EP 1 688 300 B1**
(45) Veröffentlichungstag und Bekanntmachung des Hinweises auf die Patenterteilung: **23.06.2010**
(21) Anmeldenummer: 06450016.8
(22) Anmeldetag: 01.02.2006
(51) Int. Cl.: B60P 1/64

(54) **Vorrichtung zum Be- und Entladen einer Ladefläche**
Device for loading and unloading a platform
Dispositif pour charger et décharger une plate-forme

(30) Priorität: 07.02.2005 AT 1992005
(43) Veröffentlichungstag der Anmeldung: 09.08.2006
(73) Patentinhaber: Hubauer heavy weight logistics GmbH, 4040 Linz (AT)
(72) Erfinder: Hubauer, Rudolf, 4020 Linz (AT)
(74) Vertreter: Patentanwaltskanzlei Matschnig & Forsthuber OG

(56) Entgegenhaltungen:
- AT-B- 284 714
- DE-A1- 1 756 757
- US-A- 3 174 630
- US-A- 3 249 235

## Beschreibung

Die Erfindung betrifft eine Vorrichtung zum Be- und Entladen einer Ladefläche bestehend aus zwei teleskopartig verlängerbaren Hebeelementen, wobei ein erstes Hebeelement mit einem unteren Ende verschwenkbar auf der Ladeoberfläche angeordnet ist, das zweite Hebeelement an einem unteren Ende ein Abstützelement aufweist, beide Hebeelemente zumindest in Ebenen senkrecht zur Ladefläche verschwenkbar sind, und ein Verbindungsmittel vorgesehen ist, welches die oberen Enden der beiden Hebeelemente gelenkig miteinander verbindet, sowie ein Verfahren zur Be- und Entladung von Nutzfahrzeugen unter Verwendung einer erfindungsgemäßen Vorrichtung.

Die DE 17 56 757 offenbart eine Selbstladeeinrichtung zum Be- und Entladen von Fahrzeugen, wobei zwei als Schenkel eines Dreiecks gelenkig angeordnete hydraulische Hubzylinder derart zusammenarbeiten, dass Lasten gehoben, seitlich bewegt und gesenkt werden können.

In der gattungsgemäßen AT 284 714 wird eine Lade- und Entladevorrichtung mit hydraulisch, pneumatisch oder mechanisch betätigbaren Auslegern beschrieben, wobei als seitlich ausschwenkbarer Ausleger an den beiden Endbereichen der Ladefläche des Fahrzeuges teleskopartig ausziehbare Stützrohre vorgesehen sind.

Beide Vorrichtungen haben den Nachteil, dass sie kompliziert aufgebaut sind. Des Weiteren ist das Verladen von sperrigen Lasten, wie beispielsweise Wechselbehälter oder Container, deren Schwerpunkt aufgrund von ungleichmäßiger Beladung nicht in ihrem Zentrum liegt, mit diesen Vorrichtungen gefährlich, wenn nicht gar unmöglich.

Es ist eine Aufgabe der Erfindung, eine einfache Vorrichtung zum Verladen von Lasten zu liefern, die ein gefahrloses und rasches Verladen von nicht ausbalancierten Lasten ermöglicht.

Diese Aufgabe wird durch eine Vorrichtung mit den Merkmalen nach Anspruch 1 gelöst. Ansprüche 8 und 9 stellen das dazugehörige Verfahren zum Be- und Entladen der Ladefläche gemäß der Vorrichtung nach Anspruch 1 dar.

Die Last wird mittels zumeist an Ketten befindlicher Befestigungsmittel am Lastaufnahmemittel befestigt. Durch den veränderbaren Angriffspunkt der Hebeelemente wird eine ungleiche Lastverteilung, beispielsweise in einem Wechselbehälter, ausgeglichen und die Last wird bewegt, ohne dass die Gefahr des Kippens besteht. Des Weiteren werden durch die Verlagerung des Lastenangriffspunktes die Hebeelemente gleichmäßiger belastet, wodurch es zu keinen Querkräften in der Vorrichtung kommt, die eine zusätzliche Versteifung der Konstruktion notwendig machen würden. Nachteilig an derartigen Versteifungen wäre ein erhöhtes Gewicht durch das erhöhte Eigengewicht verbunden mit höheren Produktionskosten bei gleichzeitig geringerer Nutzlast.

Um eine Positionsänderung des Verbindungsmittels relativ zu zumindest einem Ende des Lastaufnahmemittels zu ermöglichen, ist in einer bevorzugten Ausführung der Erfindung das Verbindungsmittel in oder an dem Lastaufnahmemittel verschieblich befestigt und zumindest ein Stellelement greift an dem Verbindungsmittel zur Positionsänderung an. Diese Ausführung ist einfach zu realisieren. Dazu ist das Verbindungsmittel beispielsweise in Form eines Dreiecks ausgebildet, wobei die Hebeelemente an der Basis des Dreiecks beweglich befestigt sind. Die der Basis gegenüberliegende Spitze des dreieckigen Verbindungsmittels ist an einer auf dem Lastaufnahmemittel befindlichen Führung befestigt. Das Verbindungsmittel ist nun entlang der Führung mithilfe des Stellelementes verschiebbar.

Bei einer anderen Ausführung der Erfindung greift das zumindest eine Stellelement an zumindest einem Ende des Lastaufnahmemittels an und bewirkt eine teleskopartige Längenänderung des Lastaufnahmemittels. Durch die Verlängerung eines Endes des Lastaufnahmemittels verändert sich wiederum die Relativposition des Verbindungsmittels zu den Enden des Lastaufnahmemittels. Zudem hat die teleskopartige Verlängerung des Lastaufnahmemittels den Vorteil, dass auf sehr einfache Weise eine Anpassung an Lasten mit unterschiedlichen Abmessungen erfolgen kann. Beispielsweise wird bei sehr breiten Lasten das Lastaufnahmemittel verlängert, damit die Kette, an der sich die Befestigungselemente befinden, mit dem Lastaufnahmemittel beim Umschlagvorgang nicht an der Last aufliegt und zu einer Beschädigung der selben führt. Nach erfolgter Verladung (Umschlag) der Last wird das Lastaufnahmemittel wiederum Platz sparend verkleinert. Dies ist besonders dann von Vorteil, wenn die Verladevorrichtung auf einem Lastkraftwagen montiert ist, weil dadurch die straßenverkehrsrechtlichen Lichteabmessungen beim Transport nicht überschritten werden und daher keine Sondergenehmigungen erforderlich sind.

Besonders flexibel ist die erfindungsgemäße Vorrichtung natürlich, wenn das Verbindungsmittel in oder an dem Lastaufnahmemittel verschieblich ist und zusätzlich eines oder beide Enden des Lastaufnahmemittels verlängerbar sind. Auf diese Weise wird eine optimale Anpassung an den Schwerpunkt der Last in einem weiteren Bereich möglich, zusätzlich zu einer Anpassung der Vorrichtung an unterschiedlich dimensionierten Lasten.

Als Stellelemente zur Positionsveränderung des Verbindungsmittels haben sich Hubzylinder bewährt. Die Hebeelemente sind bevorzugt hydraulische Hubzylinder, weil mit diesen problemlos Lasten von mehreren Tonnen bewegt werden können. Sind nun die Stellelemente ebenfalls hydraulische Hubzylinder, so werden sie in einer besonders kostengünstigen Variante über dasselbe Hydrauliksystem versorgt.

Besonders vorteilhaft ist es, wenn die beiden oberen Enden der Hebeelemente in einem Abstand zueinander an dem Verbindungsmittel angebracht sind, weil sich bei dieser Anordnung die beiden Hebeelemente besonders einfach und flexibel unabhängig voneinander bewegen lassen.

Im Folgenden wird ein nicht-einschränkendes Ausführungsbeispiel der Erfindung anhand von Figuren erläutert. Dabei zeigt die
- Fig. 1:: einen Lastkraftwagen in einer Seitenansicht mit zwei erfindungsgemäßen Vorrichtungen an den zwei gegenüberliegenden Enden der Ladefläche,
- Fig. 2:: eine Rückansicht des Lastkraftwagens aus Fig. 1,
- Fig. 3A:: eine Detailansicht des Verbindungsmittels und des Lastaufnahmemittels,
- Fig. 3B:: eine Detailansicht einer alternativen Ausführung des Verbindungsmittels und des Lastaufnahmemittels und
- Fig. 4A-4D:: den Ablauf des Entladens von dem Lastkraftwagen.

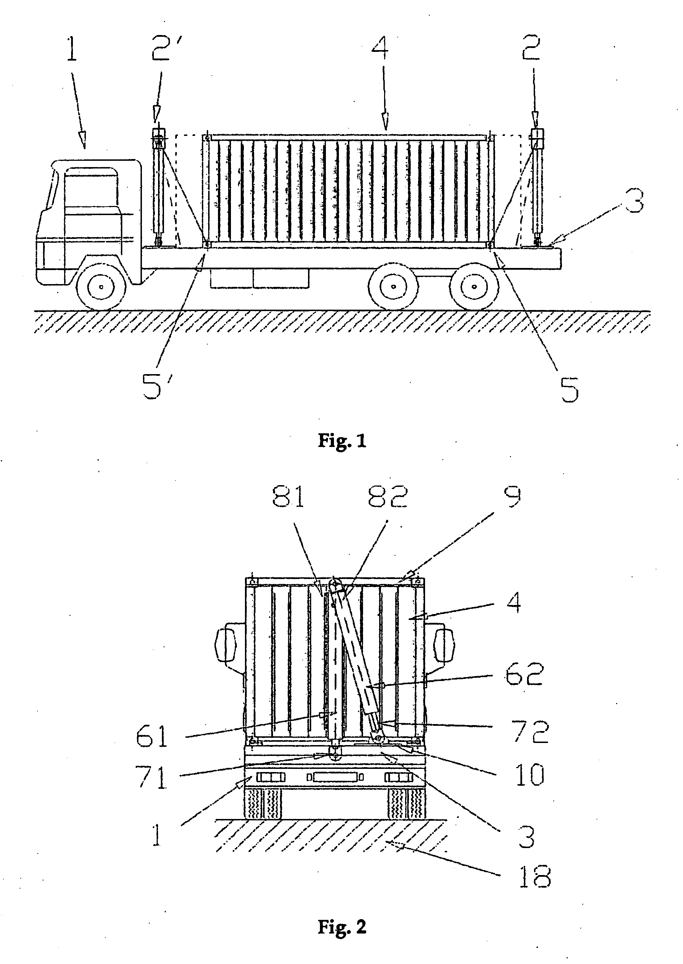

Der in Fig. 1 und Fig. 2 dargestellte Lastkraftwagen 1 weist zwei Vorrichtungen 2, 2' zum Beladen auf, die jeweils an einem Ende seiner Ladefläche 3 montiert sind. Zwischen den Vorrichtungen 2, 2' ist ein Wechselbehälter 4 abgestellt. Zusätzlich ist der Wechselbehälter 4 mit Befestigungselementen 5, 5' gegen ein Verrutschen gesichert. Anstelle eines Containers 4 könnte sich auch ein Wechselbehälter oder eine andere sperrige Last auf der Ladefläche 3 befinden.

Aus Fig. 2 ist ersichtlich, dass ein erstes Hebeelement 61 der Vorrichtung 2 mit seinem unteren Ende 71 an der Ladefläche 3 beweglich befestigt ist. Ein oberes Ende 81 ist an einem balkenförmigen Lastaufnahmemittel 9 montiert. Ein zweites Hebeelement 62 steht mit seinem oberen Ende 82 ebenfalls mit dem Lastaufnahmemittel 9 in gelenkiger Verbindung. An seinem unteren Ende 72 weist das zweite Hebeelement 62 ein Abstützelement 10 auf. Dieses Abstützelement 10 ist dabei mit dem unteren Ende 72 des zweiten Hebeelements 62 gelenkig verbunden.

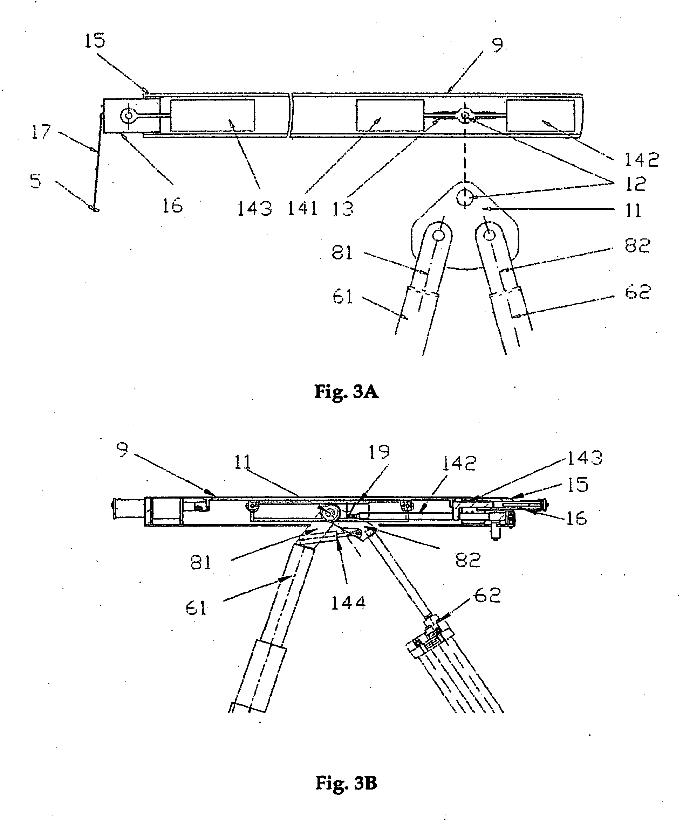

In Fig. 3A zeigt die dargestellte Prinzipskizze eine Detailansicht der Befestigung der beiden Hebeelemente 61, 62 an dem balkenförmigen Lastaufnahmemittel 9. Die beiden Hebeelemente 61, 62 sind auf einem dreiecksförmigen Verbindungsmittel 11 beispielsweise mittels Bolzen in jeweils einem Eckpunkt des Dreiecks drehbar befestigt. In dieser Ausführung ist die Befestigung der Hebeelemente 61, 62 an dem Verbindungsmittel 11 drehbar ausgeführt; ebenso ist eine gelenkige Verbindung mit dem Verbindungsmittel 11 möglich. Das Verbindungsmittel 11 ist in seinem dritten Eckpunkt auf einem verschieblichen Element, beispielsweise eine Hülse 12 fixiert. Die Hülse 12 ist auf einer in dem Lastaufnahmemittel 9 befindlichen Führung 13 aufgesteckt und ist über zwei Stellelemente 141, 142, beispielsweise über hydraulische Hubzylinder, entlang der Führung 13 bewegbar. Zur Verschiebung der Hülse 12 wurden bei dieser Ausführung aus Gründen der Betriebssicherheit und aus Kostengründen zwei kleinere Stellzylinder gewählt. In einer anderen Ausführungsform ist ein Stellelement ausreichend, dieses kann alternativ zur hydraulischen Betätigung auch mechanisch, pneumatisch oder elektrisch angetrieben sein.

Ebenso sind Ausführungen der Erfindung möglich, bei welchen die Hebeelemente 61, 62 in einem Punkt auf einem Verbindungsmittel 11 oder aber direkt auf einer beweglichen Hülse 12 angeordnet sind.

Entsprechend Fig. 3A weist das Lastaufnahmemittel 9 an seinem Ende 15 ein weiteres Stellmittel 143 auf, mit dem ein balkenartiger Abschnitt 16 teleskopartig aus dem Lastaufnahmemittel 9 herausführbar ist. An dem Abschnitt 16 ist über eine Stahlkette 17 das Befestigungselement 5 befestigt. Eine derartige Anordnung findet sich auch an dem anderen Ende des Lastaufnahmemittels 9 (nicht dargestellt). Diese Verlängerbarkeit des Lastaufnahmemittels 9 hat den Vorteil, dass die Befestigungselemente 5, 5' leichter an der zu bewegenden Last, beispielsweise an einem Wechselbehälter oder Container 4 angebracht werden können. Des Weiteren können Lasten mit unterschiedlichen Breiten von der erfindungsgemäßen Vorrichtung bewegt werden, ohne dass zusätzliche bauliche Veränderungen an der Vorrichtung vorgenommen werden müssen.

In Fig. 3B ist eine alternative Ausführung der Erfindung dargestellt. Hierbei sind die beiden Hebeelemente 61, 62 in einem Punkt miteinander verbunden. Als Verbindungsmittel 11 fungiert hier ein Bolzen, der gleichzeitig auch der Befestigung an dem Lastaufnahmemittel 9 dient. Das beispielsweise als Drehbolzen ausgeführte Verbindungsmittel 11 ist auf einem im Lastaufnahmemittel 9 verschieblichen Element 19 lösbar befestigt. Dieses Element 19 ist vorteilhafterweise in Form eines Rollwagens ausgeführt, das über zumindest ein Stellelement 142 im Lastaufnahmemittel 9 bewegt wird. Dadurch wird eine gleichmäßigere Lastverteilung im Lastaufnahmemittel 9 erzielt. Des Weiteren ist in der dargestellten Ausführung der Erfindung weiterer Stellzylinder 144 vorgesehen, der an den oberen Enden 81, 82 der Hebelemente 61, 62 befestigt ist. Dieses beispielsweise als Hydraulikzylinder ausgeführte Stellelement 144 bewirkt und/oder unterstützt die Pendelbewegung des zweiten Hebeelementes 62 beim Be- und Entladevorgang. In einer bevorzugten Ausbildung der Erfindung ist das zweite Hebeelement 62 als mehrstufiger Hydraulikzylinder ausgebildet, um schwere Lasten sicher abstellen oder aufheben zu können. Ebenso kann das erste Hebeelement 61 derart ausgebildet sein.

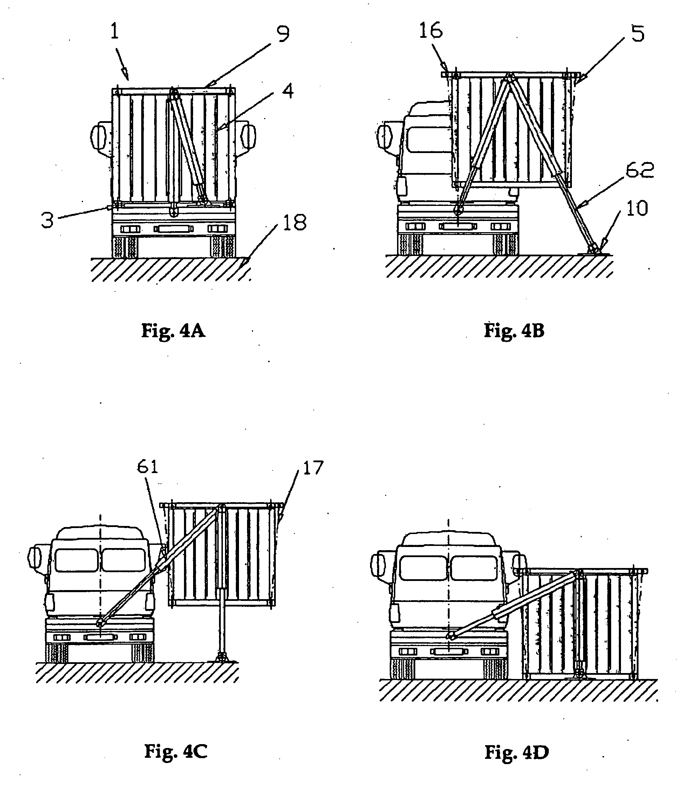

In den Fig. 4A bis 4D ist der Entladevorgang eines Wechselbehälters 4 von einem Lastkraftwagen 1 dargestellt. In Fig. 4A befindet sich der Wechselbehälter 4 auf der Ladefläche 3 des Lastkraftwagens 1, die Befestigungselemente 5, 5' sind an dem Wechselbehälter 4 befestigt und die Verladevorrichtungen 2, 2' befinden sich in ihrer Ausgangsposition. Um den Entladevorgang zu starten, wird zunächst das untere Ende 72 des zweiten Hebeelement 62 in einer im Wesentlichen parallel zur Stirnfläche des Wechselbehälters 4 pendelartigen Bewegung soweit ausgelenkt, bis das zweite Hebeelement 62 in einer Ebene normal auf die Ladefläche 3 einen Winkel von etwa 45° mit dem ersten Hebeelement 61 einschließt. Danach wird das zweite Hebeelement 62 teleskopartig verlängert, bis das Abstützelement 10 sicher auf der Abstellfläche 18, im vorliegenden Fall auf dem Erdboden, aufliegt. Das Abstützelement 10 weist an seiner dem Erdboden zugewandten Seite eine rutschfeste Matte auf, die ein Weggleiten des zweiten Hebeelementes 62 unter Belastung verhindert. Danach folgt ein teleskopartiges Verlängern des ersten Hebeelementes 61, bis die Stahlketten 17, an welchen sich die Befestigungselemente 5, 5' befinden, unter Hubspannung stehen. Sind die Spannungen der Ketten 17 unterschiedlich, so ist der Wechselbehälter 4 ungleichmäßig beladen und muss ausbalanciert werden. Hierzu wird nun mithilfe der im Lastaufnahmemittel 9 befindlichen Stellelemente 141, 142 die Hülse 12 entlang der Führung 13 bewegt. Bei der dargestellten Ausführungsform ist dabei eine Positionsveränderung von maximal 22cm über die gesamte Führungslänge möglich. Dieses Maß entspricht der theoretisch erforderlichen Außermittigkeit der beladen Wechselbehälter oder Container gemäß einschlägigen Normen.

In einer anderen Ausführungsform der Erfindung erfolgt die Lageveränderung des Lastaufnahmepunktes durch eine Längenveränderung des Lastaufnahmemittels 9. Dabei wird durch Ausfahren des balkenartigen Abschnittes 16 das eine Ende 15 des Lastaufnahmemittels 9 über das Stellelement 143 teleskopartig verlängert, während sich die Länge des zweiten Endes um denselben Längenbetrag reduziert. Dadurch verändert sich wiederum die Position des Verbindungsmittels 11 relativ zu den beiden Enden 15 des Lastaufnahmemittels 9 und die Last wird ausbalanciert. Bei dieser Variante sind die balkenartigen Abschnitte 16 um etwa 30cm ausfahrbar. Ebenso sind Kombinationen beider Methoden ausführbar, um ein optimales Ausbalancieren von Lasten zu ermöglichen.

Sobald die Hubspannungen der Stahlketten 17 durch die Lageänderung des Lastaufnahmepunktes annähernd gleich sind, wird das erste Hebeelement 61 weiter teleskopartig verlängert, bis der Wechselbehälter 4 soweit momentenfrei angehoben ist, dass er problemlos über die Ladefläche 3 des Lastkraftwagens 1 bewegt werden kann. Diese Bewegung erfolgt durch eine im Wesentlichen parallel zur Ladefläche 3 verlaufenden Bewegung des Lastaufnahmemittels 9. Dabei wird das erste Hebeelement 61 weiter teleskopartig verlängert, während gleichzeitig die Länge des zweiten Hebeelementes 62 reduziert wird (Fig. 4B).

Sobald das zweite Hebeelement 62 senkrecht zur Abstellfläche 18 ausgerichtet ist (Fig. 4C), wird die Länge des zweiten Hebeelements 62 solange reduziert, bis der Wechselbehälter 4 sicher auf dem Erdboden abgestellt ist (Fig. 4D) und die Stahlketten 17 nicht mehr unter Hubspannung stehen. Danach werden die Befestigungselemente 5, 5' von dem Wechselbehälter 4 entfernt und die Verladevorrichtung 2, 2' wieder in ihre Ausgangsposition auf dem Lastkraftwagen 1 gebracht. Dies erfolgt sinngemäß auf ungekehrtem Wege zu der oben beschriebenen Bewegungsfolge.

Beim Beladevorgang eines Lastkraftwagens 1 wird
a) das untere Ende 72 des zweiten Hebeelementes 62 in einer pendelähnlichen Bewegung bewegt, bis es zur senkrechten Mittelachse des Nutzfahrzeuges 1 einen Winkel von etwa 45° einschließt;
b) daraufhin wird die Länge des zweiten Hebeelementes 62 teleskopartig verändert, bis das Abstützelement 10 auf der Abstellfläche 18 aufliegt;
c) sodann wird die Länge des ersten Hebeelement 61 teleskopartig verlängert;
d) daran anschließend wird das Lastaufnahmemittel 9 in einer im Wesentlichen parallel zur Ladefläche 3 verlaufenden Bewegung bewegt, bis das zweite Hebeelement 62 senkrecht zur Abstellfläche 18 ausgerichtet ist;
e) daraufhin wird die Länge des zweiten Hebeelementes 62 teleskopartig reduziert;
f) danach wird das Befestigungselement 5, 5' an dem Wechselbehälter 4 befestigt;
g) sodann wird die Länge des zweiten Hebeelementes 62 teleskopartig verlängert, bis die Stahlketten 17 unter Hubspannung stehen,
h) daraufhin wird auf die oben beschriebene Weise der Wechselbehälter 4 ausbalanciert;
i) dann wird der Wechselbehälter 4 durch eine teleskopartige Verlängerung des Hebeelementes 62 momentenfrei angehoben;
i) danach wird das Lastaufnahmemittel 9 in einer im Wesentlichen parallel zur Ladefläche 3 verlaufenden Bewegung bewegt, bis das erste Hebeelement 61 senkrecht zur Ladefläche 3 ausgerichtet ist und
j) die Länge des ersten Hebeelementes 61 teleskopartig reduziert, bis der Wechselbehälter sicher auf der Ladefläche 3 aufliegt,
k) abschließend wird die Länge des zweiten Hebeelementes 62 reduziert und das untere Ende 72 des zweiten Hebeelements 62 in einer Ebene senkrecht zu der Ladefläche 3 pendelartig bewegt, bis es parallel zu dem ersten Hebeelement 61 ausgerichtet mit seinem Abstützelement 10 auf der Ladefläche 3 aufliegt.

Es versteht sich, dass die erfindungsgemäße Verladevorrichtung nicht nur auf Ladeflächen von Lastkraftwagen montiert sein kann. Ebenso ist die Vorrichtung beispielsweise zum Umschlag von Lasten von Eisenbahnwaggons auf Lastkraftwagen und umgekehrt geeignet. Hierzu kann die Vorrichtung einzeln oder paarweise auch auf dem Eisenbahnwaggon angeordnet sein. Des Weiteren ist die Montage der Vorrichtung ganz allgemein auf Flächen vorgesehen, auf welchen Lasten, insbesondere Lasten mit einem Gewicht von über 10 Tonnen, auf sichere Weise, umgeschlagen werden. Um eine richtungsunabhängige Be- oder Entladung zu ermöglichen, ist das untere Ende des ersten Hebeelements der Vorrichtung auf der Abstellfläche drehbar gelagert. Somit kann beispielsweise das Be- und Entladen eines Lastkraftwagens oder eines Eisenbahnwaggons zu beiden Seiten der Ladefläche erfolgen.

## Patentansprüche

1. Vorrichtung (2, 2') zum Be- und Entladen einer Ladefläche (3) bestehend aus zwei teleskopartig verlängerbaren Hebeelementen (61, 62), wobei ein erstes Hebeelement (61) mit einem unteren Ende (71) verschwenkbar auf der Ladeoberfläche (3) angeordnet ist, das zweite Hebeelement (62) an einem unteren Ende (72) ein Abstützelement (10) aufweist, beide Hebeelemente (61, 62) zumindest in Ebenen senkrecht zur Ladefläche (3) verschwenkbar sind, und ein Verbindungsmittel (11) vorgesehen ist, welches die oberen Enden (81, 82) der beiden Hebeelemente (61, 62) gelenkig miteinander verbindet,
**dadurch gekennzeichnet, dass**
ein Lastaufnahmemittel (9) vorgesehen ist, welches an seinen beiden im Wesentlichen in einer horizontalen Ebene liegenden Enden (15) je zumindest ein Befestigungselement (5, 5') für eine Last (4) aufweist, das Verbindungsmittel (11) an dem Lastaufnahmemittel (9) zwischen den beiden Enden (15) befestigt ist, und zumindest ein Stellelement (141, 142, 143) vorgesehen ist, mit dem die Position des Verbindungsmittels (11) relativ zu zumindest einem Ende (15) des Lastaufnahmemittels (9) veränderbar ist.

2. Vorrichtung (2, 2') nach Anspruch 1, **dadurch gekennzeichnet, dass** das Verbindungsmittel (11) in dem Lastaufnahmemittel (9) verschieblich befestigt ist und zumindest ein Stellelement (141,142) an dem Verbindungsmittel (11) zur Positionsänderung angreift.

3. Vorrichtung (2, 2') nach Anspruch 1 oder 2, **dadurch gekennzeichnet, dass** das zumindest eine Stellelement (143) an zumindest einem Ende (15) des Lastaufnahmemittels (9) angreift und eine teleskopartige Längenänderung des Lastaufnahmemittels (9) bewirkt.

4. Vorrichtung (2, 2') nach einem der Ansprüche 1 bis 3, **dadurch gekennzeichnet, dass** das zumindest eine Stellelement (141, 142, 143) ein hydraulischer Hubzylinder ist.

5. Vorrichtung (2, 2') nach einem der Ansprüche 1 bis 4, **dadurch gekennzeichnet, dass** die Hebeelemente (61, 62) hydraulische Hubzylinder sind.

6. Vorrichtung (2, 2') nach einem der Ansprüche 1 bis 5, **dadurch gekennzeichnet, dass** die beiden oberen Enden (81, 82) der Hebeelemente (61, 62) in einem Abstand zueinander an dem Verbindungsmittel (11) angebracht sind.

7. Vorrichtung (2, 2') nach einem der Ansprüche 1 bis 6, **dadurch gekennzeichnet, dass** ein weiteres Stellelement (144), das an den beiden oberen Enden (81,82) der Hebeelemente (61, 62) angreift, vorgesehen ist

8. Verfahren zum Beladen einer Ladefläche (3) eines Nutzfahrzeuges (1) mit einer Last (4), insbesondere mit einem Wechselbehälter oder Container, unter Verwendung einer Vorrichtung nach einem der Ansprüche 1 bis 7, **dadurch gekennzeichnet, dass**
das untere Ende (72) des zweiten Hebeelementes (62) in einer pendelähnlichen Bewegung bewegt, bis es zur senkrechten Mittelachse des Nutzfahrzeuges (1) einen Winkel von etwa 45° einschließt;
die Länge des zweiten Hebeelementes (62) teleskopartig verändert wird, bis das Abstützelement (10) auf der Abstellfläche (18) aufliegt;
die Länge des ersten Hebeelement (61) teleskopartig verlängert wird;
das Lastaufnahmemittel (9) in einer im Wesentlichen parallel zur Ladefläche (3) verlaufenden Bewegung bewegt wird, bis das zweite Hebeelement (62) senkrecht zur Abstellfläche (18) ausgerichtet ist;
die Länge des zweiten Hebeelementes (62) teleskopartig reduziert wird;
die über Verbindungselemente (17) mit dem Lastaufnahmemittel (9) in Verbindung stehenden Befestigungselemente (5, 5') an der Last (4) befestigt werden;
die Länge des zweiten Hebeelementes (62) teleskopartig verlängert wird, bis die Verbindungselemente 17 unter Hubspannung stehen,
die Position des Verbindungsmittels (11) relativ zu den beiden Enden (15) des Lastaufnahmemittels (9) zum Ausbalancieren der Last (4) verschieblich verändert wird;
die Last (4) durch eine teleskopartige Verlängerung des zweiten Hebeelementes (62) momentenfrei angehoben wird;
das Lastaufnahmemittel (9) in einer im Wesentlichen parallel zur Ladefläche (3) verlaufenden Bewegung bewegt wird, bis das erste Hebeelement (61) senkrecht zur Ladefläche (3) ausgerichtet ist,
die Länge des ersten Hebeelementes (61) teleskopartig reduziert wird, bis die Last (4) sicher auf der Ladefläche (3) aufliegt und
die Länge des zweiten Hebeelementes (62) reduziert und das untere Ende (72) des zweiten Hebeelements (62) in einer Ebene senkrecht zu der Ladefläche (3) pendelartig bewegt wird, bis es parallel zu dem ersten Hebeelement (61) ausgerichtet mit seinem Abstützelement (10) auf der Ladefläche (3) aufliegt.

9. Verfahren zum Entladen einer Ladefläche (3) eines Nutzfahrzeuges (1) unter Verwendung einer Vorrichtung nach einem der Ansprüche 1 bis 7, **dadurch gekennzeichnet, dass**
das untere Ende (72) des zweiten Hebeelementes (62) in einer pendelähnlichen Bewegung bewegt, bis es zur senkrechten Mittelachse des Nutzfahrzeuges (1) einen Winkel von etwa 45° einschließt;
die Länge des zweiten Hebeelementes (62) teleskopartig verändert wird, bis das Abstützelement (10) auf Abstellfläche (18) aufliegt;
die Länge des ersten Hebeelement (61) teleskopartig zum Anheben der Last (4) verlängert wird;
die Position des Verbindungsmittels (11) relativ zu den beiden Enden (15) des Lastaufnahmemittels (9) zum Ausbalancieren der Last (4) verschieblich verändert wird;
die Last (4) durch eine teleskopartige Verlängerung des ersten Hebeelementes (61) momentenfrei angehoben wird;
das Lastaufnahmemittel (9) in einer im Wesentlichen parallel zur Ladefläche (3) verlaufenden Bewegung bewegt wird, bis das zweite Hebeelement (62) senkrecht zur Abstellfläche (18) ausgerichtet ist;
die Länge des zweiten Hebeelementes (62) teleskopartig reduziert wird, bis die Last (4) sicher auf der Abstellfläche (18) aufliegt;
die über Verbindungselemente (17) mit dem Lastaufnahmemittel (9) in Verbindung stehende Befestigungselemente (5, 5') von der Last (4) gelöst werden;
die Länge des ersten Hebeelement (61) teleskopartig verlängert wird;
das Lastaufnahmemittel (9) in einer im Wesentlichen parallel zur Ladefläche (3) verlaufenden Bewegung bewegt wird, bis das erste Hebeelement (61) senkrecht zur Ladefläche (3) ausgerichtet ist,
die Länge des zweiten Hebeelementes (62) teleskopartig reduziert wird;
das untere Ende (72) des zweiten Hebeelements (62) in einer Ebene senkrecht zu der Ladefläche (3) pendelartig bewegt wird, bis es parallel zu dem ersten Hebeelement (61) ausgerichtet ist und
die Länge des ersten Hebeelements (61) reduziert wird, bis das Abstützelement (10) des zweiten Hebeelementes (62) auf der Ladefläche (3) zur Auflage kommt.

## Claims

1. A device (2, 2') for loading and unloading a loading platform (3) consisting of two telescopically extendable lifting elements (61, 62), wherein the first lifting element (61) is pivotally mounted at its bottom end (71) on the loading platform (3), and the second lifting element (62) has, at its bottom end (72), a supporting element (10), both lifting elements (61, 62) being pivotable at least in planes perpendicular to the loading platform (3), and a connecting element (11) is provided, which interconnects the top ends (81, 82) of the two lifting elements (61, 62) in articulated fashion,
**characterized in that**
a load-bearing means (9) is provided which has, at each of its two ends (15) lying substantially in a horizontal plane, at least one securing element (5, 5') for a load (4), said fastening means (11) on said load-bearing means (9) being fixed between said two ends (15), and at least one setting element (141, 142, 143) being provided, by means of which the position of said fastening means (11) can be changed relatively to at least one end (15) of said load-bearing means (9).

2. The device (2, 2') as defined in claim 1, **characterized in that** said fastening means (11) in the load-bearing means (9) is slidably attached and at least one setting element (141,142) engages the fastening means (11) for position changing purposes.

3. The device (2, 2') as defined in claim 1 or claim 2, **characterized in that** said at least one setting element (143) engages at least one end (15) of said load-bearing means (9) and causes a telescopic change in length of the load-bearing means (9).

4. The device (2, 2') as defined in any one of claims 1 to 3, **characterized in that** said at least one setting element (141, 142, 143) is a hydraulic lifting cylinder

5. The device (2, 2') as defined in any one of claims 1 to 4, **characterized in that** said lifting elements (61, 62) are hydraulic lifting cylinders.

6. The device (2.2') as defined in any one of claims 1 to 5, **characterized in that** the two top ends (81, 82) of said lifting elements (61, 62) are mounted on said fastening means (11) at a distance from each other.

7. The device (2, 2') as defined in any one of claims 1 to 6, **characterized in that** a further setting element (144) is provided which engages the two top ends (81, 82) of said lifting elements (61, 62)

8. A method for loading a loading platform (3) of a utility vehicle (1) with a load (4), in particular with an exchangeable container, using a device as defined in any one of claims 1 to 7, **characterized in that**
said bottom end (72) of said second lifting element (62) moves in the manner of a pendulum until it encloses an angle of approximately 45 ° to the vertical center axis of said utility vehicle (1);
the length of said second lifting element (62) is telescopically changed until the supporting element (10) rests on the laydown area (18);
the length of said first lifting element (61) is telescopically increased;
said load-bearing means (9) is caused to move in a substantially parallel direction to the loading platform (3) until said second lifting element (62) is perpendicularly oriented in relation to the laydown area (18);
the length of said second lifting element (62) is telescopically reduced;
the securing elements (5.5') connected to the load-bearing means (9) via coupling elements (17) are coupled to said load (4);
the length of said second lifting element (62) is telescopically increased until said coupling elements 17 are under lifting tension;
the position of said fastening means (11) relative to the two ends (15) of said load-bearing means (9) is changed by sliding in order to balance the load (4);
said load (4) is raised free of moments by telescopic lengthening of said second lifting element (62);
said load-bearing means (9) is caused to move in a direction substantially parallel to the loading platform (3) until said first lifting element (61) is perpendicularly oriented in relation to said loading platform (3);
the length of said first lifting element (61) is telescopically reduced until said load (4) rests safely on said loading platform (3); and
the length of said second lifting element (62) is reduced and the bottom end (72) of said second lifting element (62) is moved in a plane perpendicular to said loading platform (3) in a pendulum-like manner until it is parallel to said first lifting element (61) and its supporting element (10) comes to rest on said loading platform (3).

9. A method for unloading a loading platform (3) of a utility vehicle (1) using a device as defined in any one of claims 1 to 7, **characterized in that**
said bottom end (72) of said second lifting element (62) moves in the manner of a pendulum until it encloses an angle of approximately 45 ° to the vertical center axis of the utility vehicle (1);
the length of said second lifting element (62) is telescopically changed until the supporting element (10) rests on the laydown area (18);
the length of said first lifting element (61) is telescopically increased for raising said load (4);
the position of the fastening means (11) relative to the two ends (15) of said load-bearing means (9) is changed by sliding in order to balance the load (4);
said load (4) is raised free of moments by telescopic lengthening of said first lifting element (61);
said load-bearing means (9) is caused to move in a substantially parallel direction to the loading platform (3) until said second lifting element (62) is perpendicularly oriented in relation to the laydown area (18);
the length of said second lifting element (62) is telescopically reduced until said load (4) rests safely on the laydown area (18);
the securing elements (5.5') connected to said load-bearing means (9) via coupling elements (17) are released from said load (4);
the length of said first lifting element (61) is telescopically increased;
said load-bearing means (9) is caused to move in a direction substantially parallel to the loading platform (3) until said first lifting element (61) is perpendicularly oriented in relation to said loading platform (3);
the length of said second lifting element (62) is telescopically reduced;
the bottom end (72) of said second lifting element (62) is moved in a plane perpendicular to said loading platform (3) in the manner of a pendulum until it is parallel to said first lifting element (61), and
the length of said first lifting element (61) is reduced until said supporting element (10) of said second lifting element (62) comes to rest on said loading platform (3).

## Revendications

1. Dispositif (2, 2') pour charger et décharger une plate-forme (3) se composant de deux éléments de levage (61, 62) pouvant être rallongés de manière télescopique, un premier élément de levage (61) étant disposé de manière pivotante avec une extrémité (71) inférieure sur la plate-forme (3), le second élément de levage (62) présentant sur une extrémité (72) inférieure un élément d'appui (10), les deux éléments de levage (61, 62) pouvant pivoter au moins dans des plans perpendiculairement à la plate-forme (3) et un moyen de liaison (11) étant prévu, lequel relie de manière articulée les extrémités supérieures (81, 82) des deux éléments de levage (61, 62) l'une à l'autre,
**caractérisé en ce**
**qu'**un moyen de réception de charge (9) est prévu, lequel présente sur ses deux extrémités (15) se trouvant essentiellement dans un plan horizontal au moins un élément de fixation (5, 5') pour une charge (4), le moyen de liaison (11) est fixé sur le moyen de réception de charge (9) entre les deux extrémités (15) et au moins un élément de réglage (141, 142, 143) est prévu, avec lequel la position du moyen de liaison (11) peut être modifiée par rapport à au moins une extrémité (15) du moyen de réception de charge (9).

2. Dispositif (2, 2') selon la revendication 1, **caractérisé en ce que** le moyen de liaison (11) est fixé de manière mobile dans le moyen de réception de charge (9) et au moins un élément de réglage (141, 142) saisit le moyen de liaison (11) pour modifier la position.

3. Dispositif (2, 2') selon la revendication 1 ou 2, **caractérisé en ce qu'**au moins un élément de réglage (143) saisit au moins une extrémité (15) du moyen de réception de charge (9) et provoque une modification longitudinale télescopique du moyen de réception de charge (9).

4. Dispositif (2, 2') selon l'une quelconque des revendications 1 à 3, **caractérisé en ce que** l'au moins un élément de réglage (141, 142, 143) est un vérin de levage hydraulique.

5. Dispositif (2, 2') selon l'une quelconque des revendications 1 à 4, **caractérisé en ce que** les éléments de levage (61, 62) sont des vérins de levage hydrauliques.

6. Dispositif (2, 2') selon l'une quelconque des revendications 1 à 5, **caractérisé en ce que** les deux extrémités (81, 82) supérieures des éléments de levage (61, 62) sont montés à une distance l'une de l'autre sur le moyen de liaison (11).

7. Dispositif (2, 2') selon l'une quelconque des revendications 1 à 6, **caractérisé en ce qu'**un autre élément de réglage (144) qui saisit les deux extrémités (81, 82) supérieures des éléments de levage (61, 62), est prévu.

8. Procédé de chargement d'une plate-forme (3) d'un véhicule utilitaire (1) avec une charge (4), en particulier avec une caisse mobile ou un conteneur, en utilisant un dispositif selon l'une quelconque des revendications 1 à 7, **caractérisé en ce que**
l'extrémité inférieure (72) du second élément de levage (62) est déplacée en un mouvement pendulaire jusqu'à ce qu'elle forme un angle d'environ 45 ° par rapport à l'axe médian perpendiculaire du véhicule utilitaire (1) ;
la longueur du second élément de levage (62) est modifiée de manière télescopique jusqu'à ce que l'élément d'appui (10) repose sur la surface de dépôt (18) ;
la longueur du premier élément de levage (61) est rallongée de manière télescopique ;
le moyen de réception de charge (9) est déplacé en un mouvement s'étendant essentiellement parallèlement à la plate-forme (3) jusqu'à ce que le second élément de levage (62) soit orienté perpendiculairement à la surface de dépôt (18) ;
la longueur du second élément de levage (62) est réduite de manière télescopique ;
les éléments de fixation (5, 5') se trouvant en liaison par des éléments de liaison (17) avec le moyen de réception de charge (9) sont fixés sur la charge (4) ;
la longueur du second élément de levage (62) est rallongée de manière télescopique jusqu'à ce que les éléments de liaison (17) se trouvent sous tension de levage ;
la position du moyen de liaison (11) est modifiée de manière mobile par rapport aux deux extrémités (15) du moyen de réception de charge (9) pour équilibrer la charge (4) ;
la charge (4) est levée sans couple par une rallonge télescopique du second élément de levage (62) ;
le moyen de réception de charge (9) est déplacé en un mouvement s'étendant essentiellement parallèlement à la plate-forme (3) jusqu'à ce que le premier élément de levage (61) soit orienté perpendiculairement à la plate-forme (3) ;
la longueur du premier élément de levage (61) est réduite de manière télescopique jusqu'à ce que la charge (4) repose sûrement sur la plate-forme (3) et
la longueur du second élément de levage (62) est réduite et l'extrémité inférieure (72) du second élément de levage (62) est déplacée de manière pendulaire dans un plan perpendiculairement à la plate-forme (3) jusqu'à ce qu'elle repose orientée parallèlement au premier élément de levage (61) avec son élément d'appui (10) sur la plate-forme (3).

9. Procédé de déchargement d'une plate-forme (3) d'un véhicule utilitaire (1) en utilisant un dispositif selon l'une quelconque des revendications 1 à 7, **caractérisé en ce que**
l'extrémité inférieure (72) du second élément de levage (62) est déplacée en un mouvement pendulaire jusqu'à ce qu'elle forme un angle d'environ 45 ° par rapport à l'axe médian perpendiculaire du véhicule utilitaire (1) ;
la longueur du second élément de levage (62) est modifiée de manière télescopique jusqu'à ce que l'élément d'appui (10) repose sur la surface de dépôt (18) ;
la longueur du premier élément de levage (61) est rallongée de manière télescopique pour lever la charge (4) ;
la position du moyen de liaison (11) est modifiée de manière mobile par rapport aux deux extrémités (15) du moyen de réception de charge (9) pour équilibrer la charge (4) ;
la charge (4) est levée sans couple par une rallonge télescopique du premier élément de levage (61) ;
le moyen de réception de charge (9) est déplacé en un mouvement s'étendant essentiellement parallèlement à la plate-forme (3) jusqu'à ce que le second élément de levage (62) soit orienté perpendiculairement à la surface de dépôt (18) ;
la longueur du second élément de levage (62) est réduite de manière télescopique jusqu'à ce que la charge (4) repose sûrement sur la surface de dépôt (18) et
les éléments de fixation (5, 5') se trouvant en liaison par des éléments de liaison (17) avec le moyen de réception de charge (9) sont détachés de la charge (4) ;
la longueur du premier élément de levage (61) est rallongée de manière télescopique ;
le moyen de réception de charge (9) est déplacé en un mouvement s'étendant essentiellement parallèlement à la plate-forme (3) jusqu'à ce que le premier élément de levage (61) soit orienté perpendiculairement à la plate-forme (3) ;
la longueur du second élément de levage (62) est réduite de manière télescopique ;
l'extrémité inférieure (72) du second élément de levage (62) est déplacée de manière pendulaire dans un plan perpendiculairement à la plate-forme (3) jusqu'à ce qu'elle soit orientée parallèlement au premier élément de levage (61) et
la longueur du premier élément de levage (61) est réduite jusqu'à ce que l'élément d'appui (10) du second élément de levage (62) vienne en appui sur la plate-forme (3).
